# EUROPÄISCHE PATENTSCHRIFT

(11) **EP 0 433 549 B1**
(45) Veröffentlichungstag und Bekanntmachung des Hinweises auf die Patenterteilung: **22.12.1993**
(21) Anmeldenummer: 90115467.4
(22) Anmeldetag: 11.08.1990
(51) Int. Cl.: B64D 17/14

(54) **Fallschirm**
Parachute
Parachute

(30) Priorität: 19.12.1989 DE 3941806
(43) Veröffentlichungstag der Anmeldung: 26.06.1991
(73) Patentinhaber: Rheinmetall GmbH, 40880 Ratingen (DE)
(72) Erfinder: Doherr, Karl-Friedrich, Dr., D-3300 Braunschweig (DE); Münscher, Dieter, D-3300 Braunschweig (DE); Saliaris, Christos, D-3300 Braunschweig (DE); Foitzik, Roland, Dr., D-4020 Mettmann 2 (DE)

(56) Entgegenhaltungen:
- EP-A- 0 105 462
- FR-A- 2 146 167
- US-A- 4 117 993
- US-A- 4 270 714

## Beschreibung

Die Erfindung betrifft einen Fallschirm mit den Merkmalen des Oberbegriffes 1.

Ein gattungsgemäßer Fallschirm ist beispielsweise aus der europäischen Patentschrift EP 0 105 462 bekannt.
Solche Fallschirme, deren Kappe eine Tragzone mit düsenförmigen Luftaustrittsöffnungen sowie eine eingezogene Leitzone aufweist, bieten bekanntermaßen bei stabilem Sinkverhalten die Möglichkeit, aufgrund der durch die Luftaustrittsdüsen austretenden Luft dem Fallschirm und einer daran starr befestigten Last eine Drehbewegung mit stabiler Drehzahl aufzuprägen.
Aufbau, Funktion und weitere Verwendungsmöglichkeiten für derartige Fallschirme sind in der EP 0 105 462 ausführlich beschrieben.

Es hat sich jedoch gezeigt, daß ein gattungsgemäßer Fallschirm nach der EP 0 105 462 in der stationären Dreh-/Sinkphase zum Pendeln neigt.

Der vorliegenden Erfindung liegt daher die Aufgabe zugrunde, einen gattungsgemäßen Fallschirm dahingehend weiterzuentwickeln, daß er während der stationären Dreh-/Sinkphase stabil - ohne Pendeln - sinkt.

Diese Aufgabe wird gelöst von einem erfindungsgemäßen Fallschirm mit den Merkmalen des kennzeichnenden Teiles des Patentanspruches 1.

Durch die erfindungsgemäße Ausgestaltung der Fallschirmbahnen, insbesondere durch eine an den Tragzonenabschnitt jeder Bahn angesetzte trapezförmige Fläche, die ihre Nachbarbahn im Bereich der Luftaustrittsdüse überlappt, wird erreicht, daß nach vollständiger Füllung des Fallschirmes Luftaustrittsdüsen gebildet werden, wobei die besagte Trapezfläche für eine stabile Düsenform zur Verbesserung der Umfangs-Wirkung der Luftaustrittsdüsen und für eine schnelle Einstellung der gewünschten Drehzahl des Fallschirmes sorgt.
Weiterhin wird in vorteilhafter Ausgestaltung des erfindungsgemäßen Fallschirmes durch das Einbringen eines horizontalen Stabilisierungsschlitzes im Übergangsbereich zwischen dem Leitzonenabschnitt und dem Tragzonenabschnitt jeder Bahn ein stabileres Sinkverhalten erreicht. Darüber hinaus wird eine Erhöhung der aerodynamischen Leistungsdaten, wie Rotation und Widerstand, bei gleichem Durchmesser und gleicher Sinkgeschwindigkeit erreicht.

Weitere vorteilhafte Ausgestaltungen der Erfindung gehen aus den Unteransprüchen hervor.

Nachfolgend wird die Erfindung anhand eines Ausführungsbeispieles unter Zuhilfenahme einer Zeichnung näher erläutert und beschrieben. Dabei zeigen:
- Fig. 1:: zwei flach ausgebreitete Bahnen des erfindungsgemäßen Fallschirmes und
- Fig. 2:: den aus einer Vielzahl von Bahnen gemäß Fig. 1 zusammengesetzten Fallschirm in perspektivischer Seitenansicht.

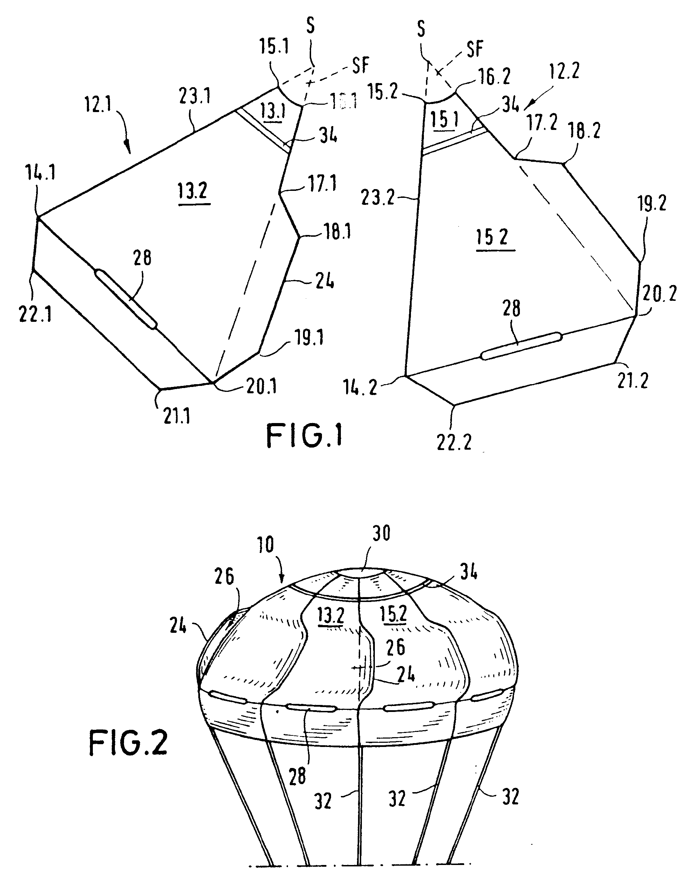

Eine in Fig. 1 beispielhaft dargestellte erste Bahn 12.1 des erfindungsgemäßen Fallschirmes 10 (siehe dazu auch Fig. 2) zeigt eine von einem Polygonzug umschriebene Fläche, die aus einer einen Tragzonenabschnitt bildenden, im wesentlichen ungleichschenkligen, dreieckförmigen ersten Fläche mit den Eckpunkten 14.1, S und 20.1 und einer an der von den Punkten 14.1 und 20.1 gebildeten Grundlinie angesetzten, einen Leitzonenabschnitt bildenden, im wesentlichen trapezförmigen zweiten Fläche mit den Eckpunkten 14.1, 20.1, 21.1 und 22.1 sowie einer an den Tragzonenabschnitt angesetzten, eine Luftaustrittsdüse bildenden, im wesentlichen trapezförmigen dritten Fläche mit den Eckpunkten 17.1, 18.1, 19.1 und 20.1 zusammengesetzt ist. Die Strecke zwischen den Punkten S und 20.1 ist dabei größer als die Strecke zwischen den Punkten S und 14.1. Dies gilt ebenfalls für die zweite Bahn 12.2, (S̅ 2̅0̅.̅2̅ > S̅ 1̅4̅.̅2̅) und natürlich für alle anderen Bahnen des Fallschirmes 10.

Eine entsprechende Flächenform zeigt auch eine in Fig. 1 beispielhaft für alle anderen Bahnen dargestellte zweite Bahn 12.2, bei der die Eckpunkte des Polygonzuges in ähnlicher Weise wie beider Bahn 12.1 bezeichnet worden sind, außer daß sie, da es sich um die zweite Bahn 12.2 handelt, mit der Kennung ".2" versehen wurden.
Bei der ersten Bahn 12.1 ist mit 23.1 ein Punkt auf der zwischen den Eckpunkten 14.1 und 15.1 gebildeten Längsseite bezeichnet, wobei der Eckpunkt 23.1 kein Eckpunkt im eigentlichen Sinne ist, sondern nur einen Punkt markiert, der gleichen Abstand zum Eckpunkt 15.1 markiert, wie der Eckpunkt 17.1 zum Eckpunkt 16.1. hat. Ähnliches gilt für den Polygon-Punkt 23.2 der zweiten Bahn 12.2. Mit S ist der Scheitelpunkt bezeichnet.
Ein zwischen den Eckpunkten 18.1 und 19.1 liegender äußerer Abschnitt der ersten Bahn 12.1 ist mit 24 bezeichnet.

In der zwischen den Eckpunkten 14.1 und 20.1 strichliert dargestellten Linie, die den Leitzonenabschnitt und den Tragzonenabschnitt der ersten Bahn 12.1 voneinander trennt, ist ein Stabilisierungsschlitz 28 vorgesehen.
Mit 34 ist ein horizontales Stabilisierungsband bezeichnet, das im oberen Teil des Tragzonenabschnittes jeder Bahn 12.1 bzw. 12.2 aufgenäht ist. Dieses Horizontalband 34 wird vorzugsweise verwendet, um die Festigkeit jeder Bahn 12.1 und natürlich aller anderen im Bereich des Scheitels S zu vergrößern.

Bei dem in den Figuren 1 und 2 dargestellten Ausführungsbeispiel des erfindungsgemäßen Fallschirmes 10 handelt es sich um einen Fallschirm mit einer zentralen Scheitelöffnung 30. In diesem Fall entfällt bei jeder Bahn 12.1 und 12.2 eine spitzenseitige kleine Dreieckfläche SF mit den Eckpunkten 15.1, S und 16.1.

Zur Fertigstellung des Fallschirmes 10 wird die erste Bahn 12.1 mit ihrer von den Eckpunkten 16.1 und 20.1 begrenzten Längsseite auf die von den Eckpunkten 15.2 und 14.2 begrenzte entsprechende Längsseite der zweiten Bahn 12.2 gelegt, so daß Eckpunkt 16.1 auf Eckpunkt 15.2 und Eckpunkt 20.1 auf Eckpunkt 14.2 zu liegen kommt und die von den Eckpunkten 17.1, 18.1, 19.1 und 20.1 beschriebene Trapezfläche den Tragzonenabschnitt der zweiten Bahn 12.2 überlappt. Anschließend werden die Bahnen 12.1 und 12.2 zwischen den Punkten 16.1 (bzw. 15.2) und 17.1 (bzw. 23.2) miteinander vernäht. Außerdem wird der von den Eckpunkten 20.1 und 21.1 begrenzte Leitzonenabschnitt der ersten Bahn 12.1 mit dem entsprechenden von den Eckpunkten 14.2 und 22.2 begrenzten Leitzonenabschnitt der Nachbarbahn 12.2 vernäht. Auf ähnliche Weise werden danach alle anderen Bahnen miteinander zum kompletten Fallschirm 10 verbunden, wobei sie außerdem in an sich bekannter Weise versäubert und umsäumt werden, sofern nicht vorher schon geschehen, und Fangleinen 32 (siehe dazu Fig. 2) werden in an sich bekannter Weise befestigt.

In Fig. 2 ist der Fallschirm 10 in vollentfaltetem Zustand dargestellt. Deutlich zu sehen ist die von ausströmender Luft nach außen ausgewölbte Kante 24 jeder Luftaustrittsdüse 26 jeder Bahn. Aufgrund der in Fig. 2 gewählten Darstellung dreht sich der Fallschirm 10 infolge der durch die Luftaustrittsdüsen 26 ausströmenden Luft im Uhrzeigersinn (gesehen in Flugrichtung). Die Stabilisierungsschlitze 28 ermöglichen einen geringen radialen Luftaustritt aus dem Fallschirm 10 und sorgen dadurch für eine größere dynamische Stabilität des Fallschirmes 10, indem sie die Neigung des Fallschirmes zum Pendeln verringern.

Die übrigen in Fig.2 verwendeten Bezugszeichen dienen der Anschaulichkeit und stellen den Bezug zu den in Fig.1 abgebildeten Bahnen 12.1 und 12.2 und dem dort Gesagten dar.

In praktischen Versuchen hat sich gezeigt, daß bei einem erfindungsgemäßen Fallschirm (10) von Dc = 1,36 m, bei dem die Fallschirmbahnen 12.1, 12.2 aus einem Textilgewebe vom Typ MIL-c-7350 Typ I mit einer Gewebeporosität von vorzugsweise höchstens 600-900 l/m².s (was 100-150 cubic feet per square foot, per minute entspricht) und einer zentralen Scheitelöffnung 30 von 50 mm Durchmesser ein Widerstandsbeiwert von Cw = 0,68 und ein Rotationskoeffizient von Cf = 0,33 erreicht wird. Diese aerodynamischen Leistungsdaten sind gegenüber einem vergleichbaren Fallschirm gemäß der EP 0105462 deutlich verbessert. Aufgrund des erfindungsgemäßen Zuschnittes der Fallschirmbahnen wird bei der bevorzugten Ausführungsform der Widerstand des entfalteten Fallschirmes erhöht, wobei sich einerseits die Sinkgeschwindigkeit verringert und andererseits die Rotationswirkung vergrößert wird. Infolge des dadurch höheren Innendrucks innerhalb der erfindungsgemäßen Fallschirmkappe verformt sich diese in eine stabilere Kappenform, so daß eine verbesserte Ausströmung in Umfangsrichtung durch die Luftaustrittsöffnungen erreicht wird und außerdem die dynamische Stabilität des Fallschirmes verbessert wird.

Bei großen Belastungen und/oder bei hohen Anforderungen an die dynamische Stabilität ist es sinnvoll, den Tragzonenabschnitt jeder Bahn (12.1 bzw. 12.2) aus wenigstens zwei Feldern (13.1, 13.2 bzw. 151, 152 ) unterschiedlicher Gewebe zusammenzusetzen. Die Gewebe können sich dabei sowohl in ihrer Porosität, im Material und/oder ihrer Festigkeit unterscheiden. Beide Felder (13.1 und 13.2 bzw. 151 und 152) sind dabei in an sich üblicher Weise zu vernähen, wobei vorzugsweise zur Erhöhung der Festigkeit der Naht ein Horizontalband (34) im Bereich der Naht aufgenäht wird. Dies ist in Fig.1 dargestellt.

Der erfindungsgemäße Fallschirm 10 eignet sich in besonderer Weise zum Einstellen einer stabilen Enddrehzahl des Fallschirmes während seines Sinkfluges, und zwar unabhängig davon, ob ihm bereits beim Abwurf eine höhere Drehzahl aufgeprägt wurde, die es abzubremsen gilt, oder ob er von einer Anfangsdrehzahl = 0 beginnend die Enddrehzahl aufbauen soll.

## Patentansprüche

1. Rotations-Fallschirm (10) mit einer Kappe aus einzelnen, sternförmig angeordneten Bahnen (12.1,12.2) mit gleichem polygonen, unsymmetrischen Zuschnitt, die zur Bildung von Luftaustrittsdüsen (26), die alle in gleiche Richtung wirken, in ihren Längsseiten teilweise miteinander vernäht sind, daß die Fläche jeder Bahn (12.1) aus einer einen Tragzonenabschnitt bildenden, im wesentlichen dreieckförmigen ersten Fläche (Eckpunkte 14.1,S,20.1), mit unterschiedlich langen Schenkeln und einer einen Leitzonenabschnitt bildenden, im wesentlichen trapezförmigen zweiten Fläche (Eckpunkte 14.1,20.1,21.1,22.1) zusammengesetzt ist, wobei die dreieckige erste Fläche und die trapezförmige zweite Fläche mit ihren gleichen Basen aneinanderliegen, und daß jede Bahn (12.1) in ihrem Tragzonenabschnitt längsseitig in einem ersten Abschnitt (16.1 bis 17.1) mit einem entsprechenden ersten Abschnitt (15.2 bis 23.2) ihrer Nachbarbahn (12.2) vernäht sowie in ihrem Leitzonenabschnitt längsseitig in einem zweiten Abschnitt (20.1 bis 21.1) mit einem entsprechenden Abschnitt (14.2 bis 22.2) vernäht ist, so daß ein längsseitiger dritter Abschnitt (17.1 bis 20.1 bzw. 23.2 bis 14.2) von einer Vernähung ausgespart ist, **gekennzeichnet** **durch** die Merkmale:
a) die Gesamtfläche jeder Bahn (12.1) weist ferner eine Luftaustrittsdüse (26) bildende, im wesentlichen trapezförmige dritte Fläche (Eckpunkte 17.1,18.1, 19.1,20.1) auf, deren Basis an dem jeweils längsten Schenkel der dreieckförmigen ersten Fläche angesetzt ist;
b) bei miteinander vernähten benachbarten Bahnen (12.1, 12.2) überlappt die trapezförmige dritte Fläche (Eckpunkte 17.1,18.1,19.1,20.1) einer Bahn (12.1) die benachbarte Bahn (12.2) im Bereich des von der Vernähung ausgesparten Abschnitts und kommt außen auf der letzteren zu liegen.

2. Fallschirm nach Anspruch 1,**dadurch gekennzeichnet**, daß in einem von zwei Eckpunkten (14.1, 20.1) jeder Bahn (12.1) gebildeten Übergang zwischen dem Leitzonenabschnitt und dem Tragzonenabschnitt ein Horizontalschlitz (28) vorgesehen ist.

3. Fallschirm nach Anspruch 2, **dadurch gekennzeichnet**, daß der Tragzonenabschnitt (Eckpunkte 14.1, S, 20.1) jeder Bahn (12.1) aus wenigstens zwei Feldern (13.1, 13.2) zusammengesetzt ist.

4. Fallschirm nach Anspruch 3, **dadurch gekennzeichnet**, daß die Felder (13.1, 13.2) aus unterschiedlichen Geweben gefertigt sind.

5. Fallschirm nach Anspruch 2, **dadurch gekennzeichnet**, daß zur Verstärkung des Tragzonenabschnitts (Eckpunkte 14.1, S, 20.1) auf jeder Bahn (12.1) ein Horizontalband (34) aufgenäht ist.

6. Fallschirm nach den Ansprüchen 3 und 5, **dadurch** **gekennzeichnet**, daß die Felder (13.1, 13.2) miteinander vernäht sind und daß im Bereich ihrer Verbindungsnaht das Horizontalband (34) aufgenäht ist.

## Claims

1. Rotation parachute (10) with a cap of individual panels (12.1, 12.2) arranged star-wise with an equal polygonal asymmetrical cut which in order to form air outlet nozzles (26) all acting in the same direction are partly stitched together along their longitudinal sides while the surface of each panel (12.1) is made up of a substantially triangular first surface (corner points 14.1, S, 20.1) having sides of different lengths and forming a supporting zone section, and a substantially trapezoidal second surface (corner points 14.1, 20.1, 21.1, 22.1) forming a guiding zone section, the triangular first surface and the trapezoidal second surface lying together along equal bases, each panel (12.1) being stitched longitudinally over a first section (16.1 to 17.1) to a corresponding first section (15.2 to 23.2) of the neighbouring panel (12.2) and also over a guiding zone section longitudinally in a second section (20.1 to 21.1) to a corresponding section (14.2 to 22.2), so that a longitudinal third section (17.1 to 20.1 and 23.2 to 14.2) is left free of stitching, characterised by the following features;
(a) the total surface of each panel (12.1) also has a substantially trapezoidal third surface (corner points 17.1, 18.1, 19.1, 20.1) which forms an air outlet nozzle (26) and of which the base is positioned against whichever is the longest side of the triangular first surface;
(b) in the case of contiguous panels (12.1, 12.2) stitched together the trapezoidal third surface (corner points 17.1, 18.1, 19.1, 20.1) of a panel (12.1) overlaps the adjacent panel (12.2) in the zone of the section left free of stitching and lies against the outside of the latter adjacent panel.

2. Parachute in accordance with Claim 1, characterised by the fact that a horizontal slit (28) is provided in a transition, formed by two corner points (14.1, 20.1) of each panel (12.1), between the guiding zone section and the supporting zone section.

3. Parachute in accordance with Claim 2, characterised by the fact that the supporting zone section (corner points 14.1, S, 20.1) of each panel (12.1) is made up of at least two areas (13.1, 13.2).

4. Parachute in accordance with Claim 3, characterised by the fact that the areas (13.1, 13.2) are made of different fabrics.

5. Parachute in accordance with Claim 2, characterised by the fact that a horizontal band (34) is stitched on to each panel (12.1) as a means of reinforcing the supporting zone section (corner points 14.1, S, 20.1).

6. Parachute in accordance with Claims 3 and 5, characterised by the fact that the areas (13.1, 13.2) are stitched together and that the horizontal band (34) is stitched in the zone of their connecting seam.

## Revendications

1. Parachute à rotation (10), avec une coiffe réalisée à partir de bandes (12.1, 12.2) individuelles disposées en étoile, ayant une coupe identique, polygonale, asymétrique, cousues pour former des buses de sortie d'air (26) agissant toutes dans la même direction, leurs côtés longitudinaux étant partiellement cousus ensemble, de façon que la face de chaque bande (12.1) soit composée d'une première face formant une section de zone support, sensiblement triangulaire (angles 14.1, S, 20.1) avec des branches de longueurs différentes et une deuxième face, formant une section de zone de guidage, sensiblement trapézoïdale (angle 14.1; 20.1, 21.1, 22.1), la première surface triangulaire et la deuxième face trapézoïdale étant reliées par leurs bases identiques, et en ce que chaque bande (12.1) est cousue dans sa section de zone support, du côté longitudinal, en une première section (16.1 à 17.1) avec une première section correspondante (15.2 à 23.2) de sa bande voisine (12.2) ainsi que dans sa section de zone de guidage côté longitudinal, dans une deuxième section (20.1 à 21.1) avec une section (14.2 à 22.2) correspondante, de façon à ce qu'une troisième section de côté longitudinal (17.1 à 20.1, ou 23.2 à 14.2) soit exempt de couture, caractérisé par les propriétés ci-après :
a) la surface globale de chaque bande (12.1) présente en outre une troisième face (angle 17.1, 18.1, 19.1, 20.1) sensiblement trapézoïdale, formant une buse de sortie d'air (26), dont la base est raccordée à la branche ayant chaque fois la plus grande longueur de la première face triangulaire;
b) lorsque les bandes (12.1, 12.2) voisines sont cousues ensemble, la troisième face trapézoïdale (angles 17.1; 18.1, 19.1, 20.1) d'une bande (12.1) chevauche la bande (12.2) voisine dans la zone de la section exempte de couture et vient se situer à l'extérieur sur cette dernière.

2. Parachute selon la revendication 1, caractérisé en ce que dans une transition, formée de deux angles (14.1, 20.1) de chaque bande (12.1), est prévue une fente horizontale (28), entre la section de zone de guidage et la section de zone support.

3. Parachute selon la revendication 2, caractérisé en ce que la section de zone support (angles 14.1, S, 20.1) de chaque bande (12.1) est composée d'au moins deux champs (13.1, 13.2)

4. Parachute selon la revendication 3, caractérisé en ce que les champs (13.1, 13.2) sont fabriqués en des tissus différents.

5. Parachute selon la revendication 2, caractérisé en ce qu'une bande horizontale (34) est cousue sur chaque bande (12.1), en vue de renforcer la section de zone support (angles 14.1, S, 20.1).

6. Parachute selon les revendications 3 et 5, caractérisé en ce que les champs (13.1, 13.2) sont cousus ensemble et en ce que la bande horizontale (34) est cousue dans la zone de son cordon de liaison.
